# EUROPÄISCHE PATENTSCHRIFT

(11) **EP 2 093 016 B1**
(45) Veröffentlichungstag und Bekanntmachung des Hinweises auf die Patenterteilung: **09.03.2011**
(21) Anmeldenummer: 09001238.6
(22) Anmeldetag: 29.01.2009
(51) Int. Cl.: B23Q 3/08, B23Q 17/00

(54) **Intelligente Mehrteile-Spannvorrichtung**
Intelligent multi-piece tensioning device
Dispositif de serrage de plusieurs pièces intelligent

(30) Priorität: 25.02.2008 DE 202008002735 U
(43) Veröffentlichungstag der Anmeldung: 26.08.2009
(73) Patentinhaber: HOHENSTEIN Vorrichtungsbau und Spannsysteme GmbH, 09337 Hohenstein-Ernstthal (DE)
(72) Erfinder: Franzki, Michael, 09337 Hohenstein-Ernstthal (DE)
(74) Vertreter: Grosse, Ulrich

(56) Entgegenhaltungen:
- DE-A1-102006 012 179
- DE-U1-202006 003 402
- US-A- 4 738 438

## Beschreibung

Die Erfindung geht von der im Oberbegriff des Patentanspruches definierten Intelligenten Mehrteile-Spannvorrichtung aus.

Die spanende industrielle Fertigung von Werkstücken durch Bohren und Fräsen auf Werkzeugmaschinen und Bearbeitungszentren bedingt vielfach qualitätsmindernde und sicherheitsrelevante Zustandsänderungen an der Spannvorrichtung durch fehlende oder falsch bzw. ungenau positionierte und gespannte Werkstücke in einer Spannvorrichtung. Notwendig ist deshalb eine bedienarme oder bedienerunabhängige Feststellung des Vorhandenseins der Werkstücke und einer richtigen oder legegenauen Positionierung der gespannten Werkstücke in der Spannvorrichtung, insbesondere bei einer Mehrteilespannung.

Kennzeichnend für eine Intelligente Spannvorrichtung ist, dass nach einer sensorischen Feststellung von ungewollten werkstückabhängigen Spannzuständen, diese Zustandsänderungen nach entsprechender Erfassung und drahtloser Informationsübertragung an die Werkzeugmaschinen-Steuerung eine aktorische Kompensation durch diese erfahren.

Damit sind Fehlfunktionen, Qualitätsmängel und sicherheitsrelevante Negativauswirkungen auf den Bediener vermeidbar. Dabei ist die Ausbildung der Spannkrafterzeugung an Spannvorrichtungen sowohl als mechanische bzw. motorische Spannung oder als Spannung mittels Drucköl oder Druckluft aktorisch zu kompensieren.

Aus DE 102005020703 B4 ist eine Intelligente Werkstückspannvorrichtung bekannt, wobei ein an der Spannwand eines Grundkörpers hängendes gehäuseförmiges Werkstück mittels eines Fluid-Druckmediums gespannt wird, in dem über drei, mit Drucköl betätigte, Schwenkspannelemente die Positionierung und Spannung realisiert wird. Prozessabhängig werden die Veränderungen an der Spannvorrichtung und am gespannten Werkstück mittels Sensoren für Temperaturmessung sowie für Spannkraft- und temperaturbedingte Verformung ermittelt und als Signale offen der Werkzeugmaschinen-Steuerung für eine aktorische Kompensation zugeleitet.

Mit dieser Lösung gelingt es das Vorhandensein des Werkstückes sowie das Aufliegen und Spannen des Werkstückes festzustellen und bedienarm oder bedienfrei aktorisch zu kompensieren.

Nachteilig ist, dass jeweils nur ein Werkstück sensorisch überwacht wird. Eine als Mehrteile-Spannvorrichtung konzipierte Intelligente Spannvorrichtung würde einen hohen Raumbedarf und Kostenaufwand für eine intelligente Überwachung der vielen Werkstücke erfordern. Diese Aufwände würden insbesondere bei klein dimensionierten Werkstücken eintreten.

Bekannter Stand der Technik sind weiterhin die Auflagenkontrolle von Werkstücken in Spannvorrichtungen und auf Werkzeugmaschinen, wobei mittels über Kanäle und Leitungen zugeführte Blas-Druckluft an Auflageflächen des Werkstückes mit dem Stauduckprinzip gearbeitet wird. Der Staudruck, der als Druckdifferenz ermittelt, bewertet und einer Regelungsstation oder Werkzeugmaschinen-Steuerung zugeführt wird, baut sich nur auf, wenn ein Werkstück vorhanden und, richtig positioniert und gespannt, auf der Austrittsstelle der Druckluft, unmittelbar, wie eine Prallplatte angeordnet, aufliegt.

Nachteilig ist auch hierbei, dass die Auflagekontrolle nur jeweils eines Werkstückes oder nacheinander durchgeführte Auflagekontrollen mehrerer Werkstücke konzipiert sind. Dies erfordert einen hohen Zeitaufwand um die Auflagekontrolle aller Werkstücke einer Mehrteile-Spannvorrichtung durchzuführen, welche durch einen möglichen ständigen Druckabfall des Mediums an den Kontrollstellen ein hohes Mediumvolumen erfordern.

Aus DE 202006003402 U1 ist eine Intelligente Mehrteile-Spannvorrichtung bekannt, die so konzipiert ist, mit Druckluft gleichzeitig an einer großen Anzahl

Auf- und Anlagestellen das Vorhandensein und die richtige Position und Spannung vieler Werkstücke in einer Mehrteile-Spannung zu kontrollieren.

Eine von der Werkzeugmaschine zugeführte, zentrale Druckluft-Zuleitung wird in parallel verlaufende Leitungsstränge gezweigt, so dass an jedem Werkstück mindestens vier Austrittsöffnungen, an den Auflage- und Anlagestellen am Werkstück anliegend, enden.

Jeder Leitungsstrang ist mit einem P/E-Wandler verbunden. Diese sind über einen gemeinsamen Sender und Empfänger mit der Werkzeugmaschinen-Steuerung drahtlos über Funkwellen, Infrarotstrahlen oder auch induktive Kraftströme informationsverbunden.

Nachteilig ist an dieser Lösung, dass die Werkstücklage-Kontrolle nur
- einseitig, auf der Seite der Werkstückanlage an festen Spannbacken bzw. festen äußeren Anlagebacken erfolgt,
- ausschließlich mit Elementen auf der Grundlage von Blas-Druckluft erfolgt,
- auf Mehrteile-Spannvorrichtungen mit Handspannung konzentriert ist, wobei ein bedienarmer Prozess üblicherweise eine Spannung mit Hydrauliköl oder einem anderen prozessunterstützenden Druckmedium erfordert.

Der im Patentanspruch 1 angegebenen Erfindung liegt das Problem zugrunde, eine Mehrteile-Spannvorrichtung so intelligent auszubilden, dass
- ein selbsttätiges Einlegen und Spannen der Werkstücke sensorisch kontrollierbar ist, wobei elektronische Sensoren neben der Blas-Druckluft-Abfrage anwendbar sein sollten
- die sensorische Auflagekontrolle nach durchgeführter Ableitung von Spänen mittels Blasluft durchführbar ist
- die Mehrteile-Spannung als hydraulische Spannung konzipiert ist.

Das Problem wird durch den Patentanspruch 1 gelöst.

Die vorgeschlagene Intelligente Mehrteile-Spannvorrichtung ist so konzipiert, dass das Hydraulische Spannbacken-System mit Werkstück-Auflageelementen an den Spannbacken ausgestattet ist, mit denen austauschbar die Werkstück-Auflagekontrolle mit elektronischen Sensoren oder mit Blasluft-Druckluft-Abfrage realisierbar ist. Über Blasluft-Leitungen im Basiskörper ist eine dauerhafte Zufuhr von Blasluft zur Ableitung von Spänen aus dem Spannraum und von Funktionsteilen gewährleistet.

Weitere Ausgestaltungen der Erfindung sind in den Patentansprüchen 2 bis 4 angegeben. Sie betreffen Anwendungsvorschläge für die Lagesicherung der Auflageelemente, die Leitungsverbindung der elektronischen Sensoren mit dem Funkmodul und die Funktionselemente des Funkmoduls.

Die Erfindung ist in zwei Ausführungsbeispielen in den Figuren 1 bis 6 vereinfacht dargestellt und im folgenden Teil der Beschreibung näher erläutert:
- Fig. 1: eine 3D-Ansicht einer Intelligenten Mehrteile-Spannvorrichtung mit elektronischen Sensoren und einem Funkmodul
- Fig. 2: eine 3D-Ansicht der Intelligenten Mehrteile-Spannvorrichtung mit Luftabfrage
- Fig. 3: eine 3D-Ansicht mit Sensor-Auflageelement
- Fig. 4: eine 3D-Ansicht mit Luftabfrage-Auflageelement
- Fig. 5: eine Ansicht des Sensor-Auflageelementes im Mittenschnitt
- Fig. 6: ein Mittenschnitt des Basiskörpers mit Zwischen-Spannbacken

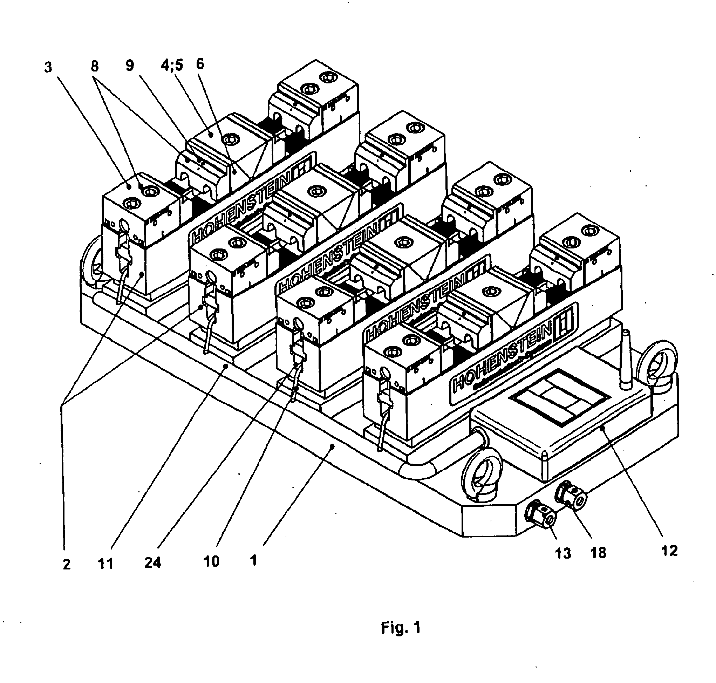

Die in Fig. 1 vereinfacht dargestellte Intelligente Mehrteile-Spannvorrichtung besteht im Wesentlichen aus der Grundplatte 1, auf der vier Mehrteile-Spannvorrichtungen für eine gleichzeitige intelligente Spannung von acht in der Fig. 1 aber nicht dargestellten Werkstücken. Die Basiskörper 2 sind jeweils mit zwei festen Anlagebacken 3, mit einem Zwischen-Spannbacken 4 und mit vier Sensor-Auflageelementen 8 bestückt. Die Spannung des Zwischen-Spannbacken 4 erfolgt über den Doppel-Spannkeil 5 und die beiden beweglichen Keilbacken 6. Er wird über einen nicht dargestellten Hydraulik-Spannkolben betätigt. Das benötigte Hydrauliköl wird über den Hydrauliköl-Anschluss 13 zugeführt. Die elektronischen Werkstückauflage-Sensoren 9 in den Sensor-Auflageelementen 8 sind über die Sensor-Kabel 10, in der Kabelführungsnut 24 und in der Kabelhalterung 11 geführt, mit dem Funkmodul 12 leitungsverbunden.

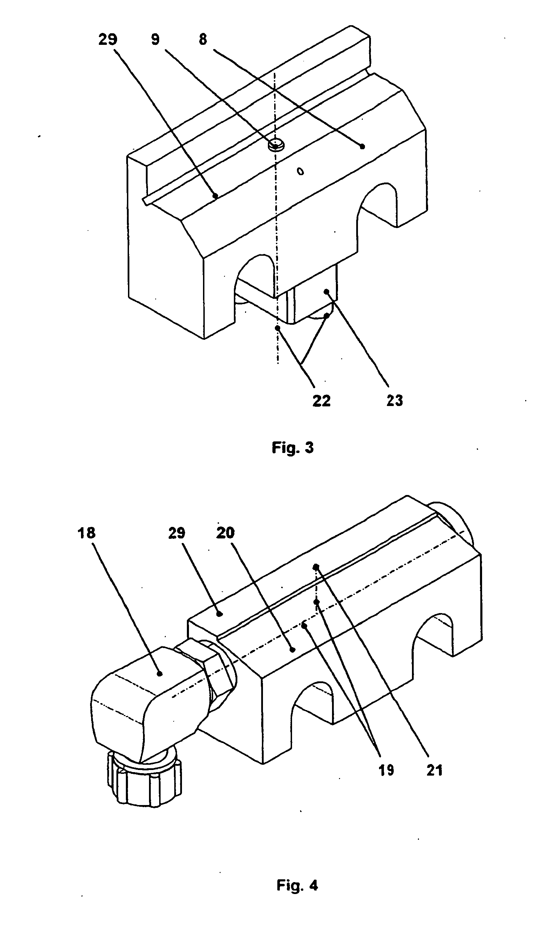

Eine separate Darstellung des Sensor-Auflageelementes 8 beinhaltet Fig. 3.

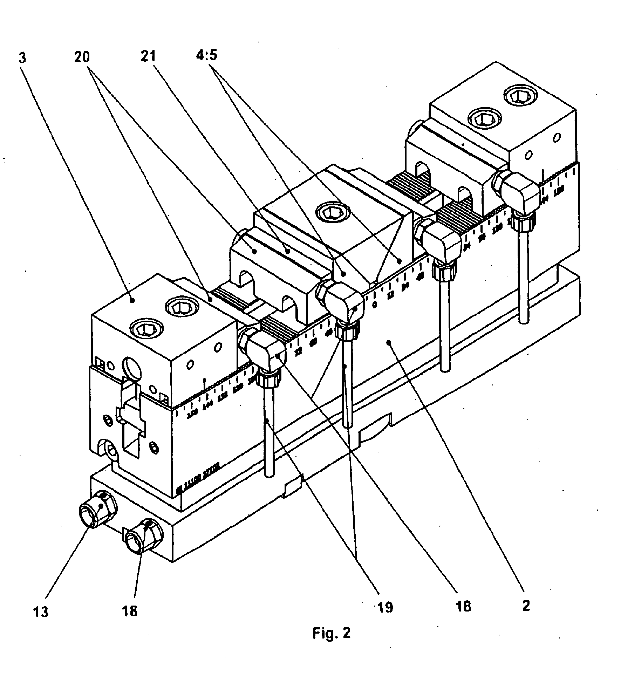

Die in Fig. 2 vereinfacht dargestellte Intelligente Mehrteile-Spannvorrichtung besteht im Wesentlichen nur aus Basiskörper 2, auf dem zwei feste Anlagebacken 3, ein Zwischen-Spannbacken 4, hydraulisch betätigt über den Hydrauliköl-Anschluss 13 und vier Luftabfrage-Auflageelemente 20 angeordnet sind.

Jede Stauluft-Werkstück-Auflagekontrolle 21, hier als eine Bohrung mit 1 mm Durchmesser im Luftabfrage-Auflageelement 20 ausgebildet, ist über Blasluft-Leitungen 19 mit Blasluft-Anschlüssen 18 verbunden.

Eine separate Darstellung des Luftabfrage-Auflageelements 20 mit der Anordnung der Stauluft-Werkstück-Auflagekontrolle 21 in der Werkstück-Auflagefläche 28 beinhaltet Fig. 4.

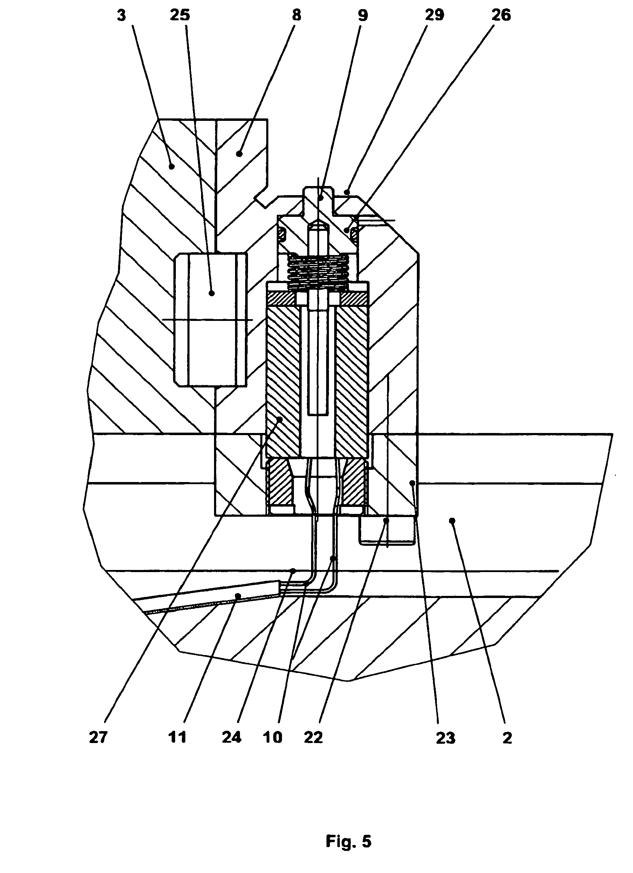

Die in Fig. 5 dargestellte Komponenten-Verbindung umfasst eine feste Anlagebacke 3, an der ein Sensor-Auflageelement 8 befestigt und mittels einer Lagesicherungskupplung 25, in Passbohrungen dieser Komponenten aufgenommen, radialgerichtet positioniert und gegen Querkräfte gesichert ist.

In dem Sensorelement 8 sind als Funktionselemente der federnden Sensorstößel 26, der induktive Wegesensor 27 und die Sensor-Schraubjustierung 22 aufgenommen. In dem Positionieransatz 23, des Sensor-Auflageelementes 8 ist das Sensor-Kabel 10 als Bündel in der schräg nach außen verlaufenden Kabelführungsnut 24 im Basiskörper 2, in einer Kabelführung aufgenommen und zum nicht dargestellten Funkmodul 12 geleitet.

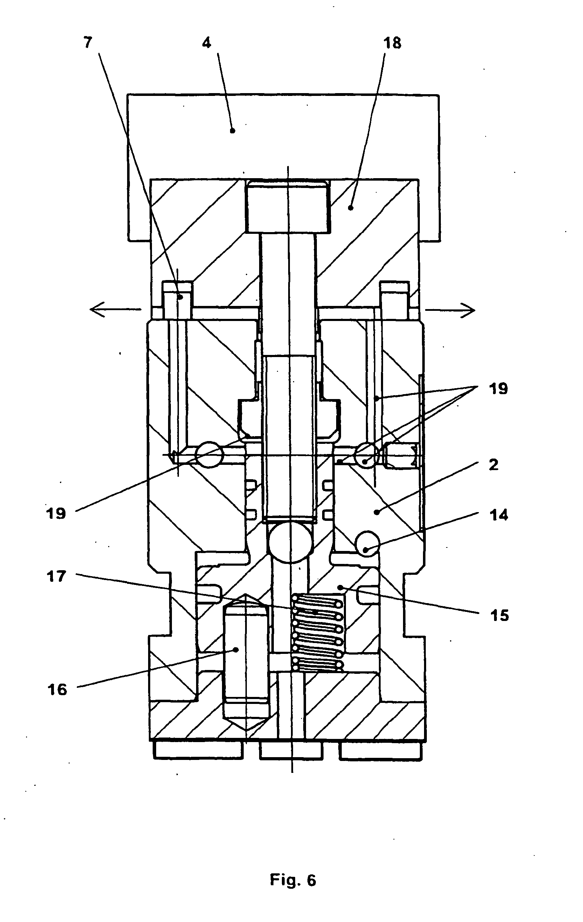

In Fig. 6 ist der Basiskörper 2 quer mit dem Hydraulik-Spannkolben 15 in gespannter unterer Stellung dargestellt. Durch die Hydrauliköl-Leitung 14 wird Hydrauliköl zugeführt. Der Hydraulik-Spannkolben 15 wird durch das Führungselement 16 gegen Verdrehung gesichert. Die Druckfeder 17 betätigt den Entspannvorgang. Durch die Blasluft-Leitungen 19 wird die Blasluft zum Ausblasen und Ableiten der Späne zugeführt.

Die Säuberung von Spänen erfolgt an der Spannstelle am Zwischen-Spannbacken 4, insbesondere an den Zugfederverbindungen 7 der zwei beweglichen Keilbacken 6 und am Werkstück. Der Hydraulik-Spannkolben 15 gibt in Spannstellung die Blasluft-Leitung 19 für die Blasluft-Zuführung der Mitten-Spannnut und zu der Kabelführungsnut 24 im Basiskörper 2 frei.

### Bezugszeichenliste

- 1: Grundplatte
- 2: Basiskörper
- 3: feste Anlagebacken
- 4: Zwischen-Spannbacken
- 5: Doppel-Spannkeil (am Zwischen-Spannbacken)
- 6: bewegliche Keilbacken (am Zwischen-Spannbacken)
- 7: Zugfederverbindung (von beweglichen Keilbacken)
- 8: Sensor-Auflageelement
- 9: elektronischer Werkstückauflage-Sensor
- 10: Sensor-Kabel
- 11: Kabelhalterung
- 12: Funkmodul
- 13: Hydraulik-Anschluss
- 14: Hydrauliköl-Leitung
- 15: Hydraulik-Spannkolben
- 16: Führungselement (für Hydraulik-Spannkolben)
- 17: Druckfeder (im Basiskörper)
- 18: Blasluft-Anschluss
- 19: Blasluft-Leitungen
- 20: Luftabfrage-Auflageelement
- 21: Stauluft-Werkstück-Auflagekontrolle
- 22: Sensor-Schraubjustierung
- 23: Positionieransatz (des Sensor-Auflageelements)
- 24: Kabelführungsnut (im Basiskörper)
- 25: Lagesicherungskupplung
- 26: federnder Sensorstößel
- 27: induktiver Wegesensor
- 28: Werkstück-Auflageflächen (auf Sensor-Auflageelement)

## Patentansprüche

1. Intelligente Mehrteile-Spannvorrichtung für ein sensorisch kontrolliertes selbsttätiges senkrechtes Einlegen und waagerechtes schraubstockartiges Spannen mehrerer gleicher Werkstücke sowie gleichzeitigem Entfernen von Spänen mittels Blasluft, zwischen zwei festen Anlagebacken (3) und einem Doppelspannkeil (5) am Zwischen-Spannbacken (4), auf einem Basiskörper (2) angeordnet, **dadurch gekennzeichnet,**
**dass** jedes Werkstück auf zwei Werkstück-Auflageflächen (28) von zwei sich gegenüberliegenden Sensor-Auflageelementen (8) oder auf Luftabfrage-Auflageelementen (20), die jeweils zueinander gerichtet an einem festen Anlagebacken (3) und an dem Zwischen-Spannbacken (4) befestigbar sind, auflegbar sind und
**dass** senkrecht zur Einlegerichtung der Werkstücke an den Werkstück-Auflageflächen (28) wahlweise ein oder zwei elektronische Werkstückauflage-Sensoren (9) und als deren Funktionselemente federnder Sensorstößel (26), induktiver Wegesensor (27) und Sensor-Schraubjustierung (22) in jedem Sensor-Auflageelement (8) und Stauluft-Werkstück-Auflagekontrollen (21) gemeinsam mit einem Blasluft-Anschluss (18) und den Blasluftleitungen (19) in jedem Luftabfrage-Auflageelement (20) aufgenommen sind und
**dass** in der Spannstellung eines in der Mittenlage im Basiskörper (2) senkrecht zur Betätigung des Doppel-Spannkeils (5) am Zwischen-Spannbacken (4) angeordneten Hydraulik-Spannkolbens (15), die über Blasluft-Leitungen (19) an die Spannstelle am Doppel-Spannkeil (5) und an das Werkstück dauerhaft zugeführte Blasluft ergänzend über die Mitten-Spannnut in die beidseitig nach außen und schräg nach unten gerichtet verlaufende Kabelführungsnut (24) am Basiskörper (2) geleitet wird.

2. Intelligente Mehrteile-Spannvorrichtung nach Patentanspruch 1, **dadurch gekennzeichnet,**
**dass** vorzugsweise für
Rohteile elektronische Werkstückauflagesensoren (9) und für bearbeitete Teile Stauluft-Werkstück-Auflagekontrollen (21) anwendbar sind.

3. Intelligente Mehrteile-Spannvorrichtung nach Patentanspruch 1, **dadurch gekennzeichnet,**
**dass** in rückseitigen Passbohrungen jedes Sensor-Auflageelement (8) und Luftabfrage-Auflageelementes (20) einerseits und in den beweglichen Keilbacken (6) sowie in den festen Anlagebacken (3) andererseits scheibenförmig ausgebildete Lagesicherungs-Kupplungen (25) aufgenommen und radialgerichtet positioniert sowie gegenüber Querkräften gesichert sind.

4. Intelligente Mehrteile-Spannvorrichtung nach Patentanspruch 1, **dadurch gekennzeichnet,**
**dass** die elektronischen Werkstückauflage-Sensoren (9) über Sensor-Kabel (10) mit einem Funkmodul (12) bezogen auf Energieversorgung und Informationsdaten-Übermittlung leitungsverbunden sind.

## Claims

1. Intelligent multi-piece tensioning device for sensor-controlled, automatic vertical loading and horizontal vice-type clamping of several workpieces of the same design and simultaneous chip removal by air blow, arranged on a base body (2) between two fixed contact jaws (3) and one double-sided, angled jaw actuator wedge (5) at the intermediate clamping jaw (4), **characterised in**
**that** any of the workpieces can be put on two workpiece resting surfaces (28) of two juxtaposed electronic presence sensing seats (8) or air catch presence sensing seats (20) which can be attached each oriented one to another to a fixed contact jaw (3) and the intermediate clamping jaw (4), and
**that** vertically to the workpiece loading direction, optionally one or two electronic presence sensors (9) coming with spring-mounted sensor tappet (26), inductive path sensor (27) and the sensor screw adjustment as their function elements in each of the workpiece presence sensing seats (8), and the ram air-controlled workpiece presence controls (21) together with one blow air port (18) and the blow air ducts (19) are located in any of the air catch presence sensing seat (20) at the workpiece resting surfaces (28), and
**that** in clamped position of a hydraulic clamping piston (15) arranged vertically in centre position in the base body (2) at the intermediate clamping jaw (4) to actuate the double-sided, angled jaw actuator wedge (5), the blow air constantly supplied to the clamping point at the double-sided, angled jaw actuator wedge (5) and to the workpiece is additionally supplied via the centre clamping slots in both external cable guide slots (24) leading diagonally down at the base body (2).

2. Intelligent multi-piece tensioning device as per patent claim 1, **characterised in that** preferably for
rough parts electronic presence sensors (9) and for
machined parts ram air controlled presence controls (21) are to be used.

3. Intelligent multi-piece tensioning device as per patent claim 1, **characterised in that** in the rear dowel holes of any of the electronic presence sensing seats (8) and air catch presence sensing seats (20) as well as in the moving wedge jaws (6) and in the fixed contact jaws (3) disc-shaped secure fit couplings (25) are located, aligned in radial position and secured against shear forces.

4. Intelligent multi-piece tensioning device as per patent claim 1, **characterised in that** the electronic workpiece presence sensors (9) are connected to a radio module (12) by means of sensor cable (10) to provide power supply and informational data transfer.

## Revendications

1. Dispositif intelligent de serrage de plusieurs pièces pour un chargement vertical automatique contrôlé par détecteurs présence pièce et un serrage horizontal type étau de plusieurs pièces du même modèle ainsi que soufflage simultané de copeaux, étant disposé sur un corps de base (2) sur la mâchoire intermédiaire (4), entre deux mâchoires de butée fixes (3) et une clavette de serrage double (5), **caractérisé en ce que**:
chacune des pièces peut être déposée sur deux surfaces d'appui de pièces (28) de deux sièges présence pièce contrôlés par détecteur (8) arrangés l'un vis-à-vis de l'autre ou sur des sièges de contrôle pneumatique présence pièce (20) pouvant être fixés, orientés l'un envers l'autre, sur une mâchoire de butée fixe (3) et sur la mâchoire intermédiaire (4) et que
verticalement à la direction de chargement des pièces, chacun des sièges présence pièce contrôlés par détecteur (8) héberge sur les surfaces d'appui des pièces (28) à option un ou deux détecteurs électroniques présence pièce (9) ayant comme éléments fonctionnels une tige de détecteur (26), un détecteur inductif de distance (27) et un ajustage fileté (22) et que chacun des sièges de contrôle pneumatique présence pièce (20) héberge des contrôles présence pièce à l'air barrage (21) ensemble avec un port air barrage (18) et les conduites air de soufflage (19) et que
en position serrée d'un piston de serrage hydraulique (15) disposé verticalement à l'actionnement de la clavette de serrage double (5) sur la mâchoire intermédiaire (4) dans une position du milieu sur le corps de base (2) l'air de soufflage alimenté en permanence au point de serrage à la clavette de serrage double (5) et à la pièce via les conduites air de soufflage (19) est guidée en plus via la rainure centrale de serrage vers la rainure guide-câble (24) descendant sur les deux côtés du corps de base (2).

2. Dispositif intelligent de serrage de plusieurs pièces suivant revendication 1, **caractérisé en ce que**:
de préférence
des détecteurs électroniques présence pièce (9) sont utilisés pour les pièces brutes et
des contrôles présence pièce à l'air barrage (21) sont utilisés pour des pièces usinées.

3. Dispositif intelligent de serrage de plusieurs pièces suivant revendication 1, **caractérisé en ce que**:
dans les trous d'ajustage du revers de chacun des sièges présence pièce contrôlés par détecteur (8) et des sièges de contrôle pneumatique présence pièce (2) d'une part et dans les mâchoires coniques mobiles (6) ainsi que dans les mâchoires de butée fixes (3) d'autre part, des accouplements assurant la position (25) en forme de disque sont prévus et positionnés en direction radiale et protégés contre les forces transversales.

4. Dispositif intelligent de serrage de plusieurs pièces suivant revendication 1, **caractérisé en ce que**:
les détecteurs électroniques présence pièce (9) sont connectés en puissance avec un module radio (12) concernant l'alimentation en énergie et le transfert de données d'information, via le câble de détecteur (10).
